# EUROPEAN PATENT APPLICATION

(11) **EP 4 383 781 A1**
(43) Date of publication of application: **12.06.2024**
(21) Application number: 21952795.9
(22) Date of filing: 05.08.2021
(51) Int. Cl.: H04W 16/28

(54) **CONTROL METHOD, COMMUNICATION DEVICE, AND PROGRAM**

(71) Applicant: Nippon Telegraph And Telephone Corporation, Chiyoda-ku Tokyo 100-8116 (JP)
(72) Inventor: WAI, Shuki, Musashino-shi, Tokyo 180-8585 (JP); IWAKUNI, Tatsuhiko, Musashino-shi, Tokyo 180-8585 (JP); UCHIDA, Daisei, Musashino-shi, Tokyo 180-8585 (JP); ARAI, Takuto, Musashino-shi, Tokyo 180-8585 (JP); KITA, Naoki, Musashino-shi, Tokyo 180-8585 (JP)
(74) Representative: Brevalex
(86) International application number: PCT/JP2021/029132
(87) International publication number: WO 2023/012970

(57) **Abstract**

One aspect of the present invention is a control method comprising: an acquisition step of acquiring a first coverage indicating a range in which a communication device and a terminal can communicate with each other, and a second coverage indicating a range in which the communication device provides a communication service; and a derivation step of deriving a beam width communicable in the second coverage on the basis of the first coverage and the second coverage acquired in the acquisition step.

## Description

### [Technical Field]

This invention relates to technology of control methods, communication devices and programs.

### [Background Art]

In a high frequency band such as a millimeter wave band or a terahertz band, free space propagation loss is greater than that in a low frequency band such as a microwave band. For this reason, it is necessary to use a beamforming technique for concentrating power in a specific direction for compensation (for example, see NPL 1).

In the case where the combination of wireless stations performing communication is always fixed by P-P (Point-to-Point) type communication and the positional relation between the wireless stations and the propagation environment around the wireless stations are not changed, the beamforming can be performed fixedly in advance when the wireless stations are installed.

On the other hand, in the case of P-MP (Point-to-Multi Point) type accommodating a plurality of wireless stations, or in the case where at least one of the wireless stations moves, the beamforming cannot be performed fixedly. In this case, adaptive beamforming is required for adaptively controlling the direction of beam formation in accordance with the position of a wireless station requiring communication among a plurality of wireless stations, the movement of the wireless station, and the change of the propagation environment around the wireless station.

Since adaptive beamforming does not require a mechanical driver, adaptive beamforming is generally performed by using a plurality of antenna elements and adjusting the phase relationship of radio waves radiated between the elements. However, in order to appropriately adjust the phase relationship, it is necessary to derive an appropriate phase relationship after grasping the phase relationship between the antenna elements of the wireless stations on the transmitting side and the receiving side. That is, it is necessary to grasp the state of the propagation path between antenna elements in all combinations of antenna elements between the transmitting and receiving stations.

Although the state of the propagation path can be grasped by transmitting and receiving known signals between the transmitting and receiving stations, other communication cannot be performed between the transmitting and receiving stations, and since the propagation coefficient of the propagation path needs to be accurately transmitted from the receiving station to the transmitting station, the overhead of the communication increases.

For this reason, adaptive beamforming uses a technique in which signals containing beam IDs tied to a plurality of pre-discretely set candidate beams are transmitted and received as respective candidate beams, and the beam ID determined to be the most suitable for communication is selected from among these beams. This technique is called beam sweeping. Beam sweeping can suppress the increase in overhead. Beam sweeping is also specified and implemented in wireless communication systems such as 3GPP 5G (5th Generation) and IEEE802.11ad, which have been put into practical use in recent years (see, for example, NPLs 1, 2 and 3).

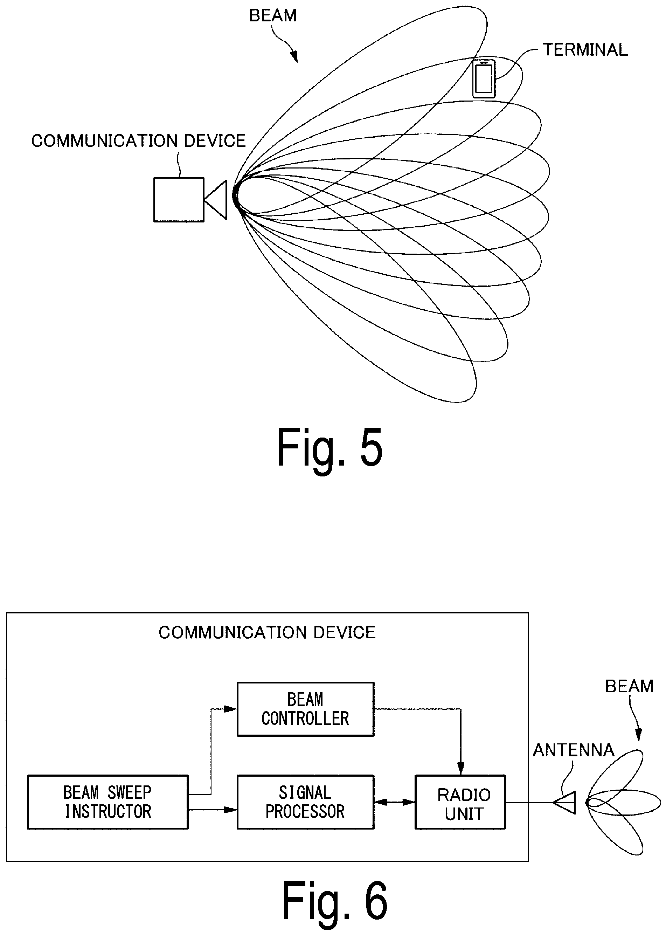

Fig. 5 is a conceptual diagram including a communication device, a beam emitted by the communication device, and a terminal. General beam sweeping in the communication device will be described with reference to Fig. 5. In Fig. 5, an elliptical figure shows the shape of a beam.

First, the communication device generates a beam sweep signal that has a beam ID embedded therein as digital information, the beam ID being able to uniquely identify each beam. By transmitting this beam sweep signal on each of the beams that are generated by time-switching, a terminal 102 measures the reception power of each beam, reads the beam ID embedded in the beam sweep signal to determine which transmitting-side beam has better quality, and provides feedback to the communication device. Therefore, the communication device selects a beam of good quality.

Here, the beam sweep signal is, for example, a Sector Sweep Frame (see, for example, NPL 4) in IEEE 802.11ay or an SS/PBCH (see, for example, NPL 2) in 5G.

Also, the beam sweep signal also serves as a notification signal, and is generally transmitted and received by a low-speed fixed MCS (Modulation and Coding Scheme) so that the beam sweep signal can be easily received by the opposite station.

Next, a functional configuration of the communication device of Fig. 5 will be described. Fig. 6 is a block diagram showing a configuration of a conventional communication device. As shown in Fig. 6, the communication device includes a beam sweep instructor, a beam controller, and a signal processor. The beam sweep instructor outputs a generation instruction for a beam sweep signal to the signal processor, and at the same time outputs a beam switching instruction to the beam controller so as to switch the beam in synchronization with the beam sweep signal. The beam controller controls the directivity of the beam formed by a radio unit according to an instruction from the beam sweep instructor.

The radio unit switches the beam according to an instruction from the beam controller, converts a signal received from the signal processor into a radio signal, transmits the radio signal from an antenna, converts the radio signal received from the antenna into an electric signal, and transmits the electric signal to the signal processor. If information about which beam has the best quality communication is received by means of a feedback signal from an opposing wireless device, not shown, the signal processor notifies the beam controller to use that beam for communication.

Thus, the communication device can perform beam selection after transmitting a signal including a beam ID associated with a plurality of previously discretely set candidate beams, by each candidate beam.

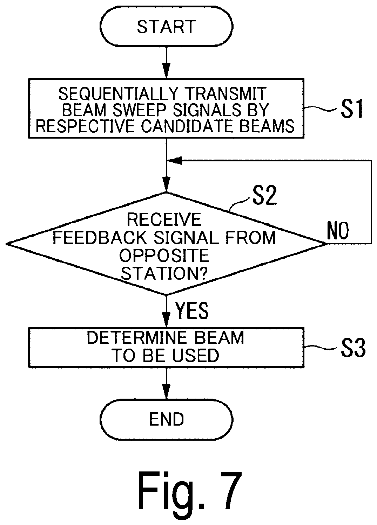

Fig. 7 is a flow chart showing a flow of beam selection processing in the conventional communication device. When the communication device starts the operation of beam selection at arbitrary timing such as timing determined by the communication standard, the communication device sequentially transmits the beam sweep signal on each candidate beam (step S1). The communication device waits until a feedback signal from an opposite radio station is received. If the communication device receives the feedback signal (step S2: YES), the communication device determines a beam to be used for subsequent communication on the basis of information indicating which beam quality is best that is included in the feedback signal (step S3).

### [Citation List]

### [Non Patent Literature]

[NPL 1] "5G Multi-antenna Technology," NTT DOCOMO Technical Journal, Vol.23, No.4, pp.30-39, January 2016.
[NPL 2] Kazuaki Takeda, et al., "Study status for technology for the physical layer and the high frequency band utilization in 5G", NTT DOCOMO Technical Journal, Vol.25, No.3, pp. 23-32, October 2017.
[NPL 3] Koji Takinami, et al., "Standardization Trends and Element Technologies for Millimeter Wave Band Wireless LAN Systems," IEICE Communications Society Magazine, No.38, Autumn, pp.100-106, 2016.
[NPL 4] Y. Ghasempour, C.R.C.M.da Silva, C. Cordeiro and E.W.Knightly, "IEEE 802.11ay: Next-Generation 60 GHz Communication for 100 Gb/s Wi-Fi," in IEEE Communications Magazine, vol. 55, No. 12, pp. 186-192, Dec. 2017.

### [Summary of Invention]

### [Technical Problem]

The beam sweep signal is an essential signal for determining a beam to be used between radio stations, and since the beam sweep signal itself contains only information for determining the beam, other data cannot be transmitted during transmission of the signal. Therefore, the beam sweep signal needs to be transmitted efficiently in a short time as much as possible since the transmission of the beam sweep signal becomes the overhead of communication.

If the width of the beam for transmitting the beam sweep signal can be widened, the number of beam sweep signals can be reduced by that amount, thereby improving the communication efficiency. However, generally, the beam width and the beam gain are inversely proportional to each other, and the range in which the beam can reach is narrowed by widening the beam width. Therefore, if the beam width is too wide, there is a possibility that a desired area to which the communication service is to be provided cannot be satisfied, and the quality of the communication service deteriorates.

Thus, it is difficult to improve the communication efficiency and to secure the quality of the communication service.

With the foregoing circumstances in view, it is an object of the present invention to provide a technology that can improve communication efficiency and ensure the quality of a communication service.

### [Solution to Problem]

One aspect of the present invention is a control method of a communication device, the control method comprising: an acquisition step of acquiring a first coverage indicating a range in which the communication device and a terminal can communicate with each other, and a second coverage indicating a range in which the communication device provides a communication service; and a derivation step of deriving a beam width communicable in the second coverage on the basis of the first coverage and the second coverage acquired in the acquisition step.

One aspect of the present invention is a communication device, comprising: an acquirer that acquires a first coverage indicating a range in which the communication device and a terminal can communicate with each other, and a second coverage indicating a range in which the communication device provides a communication service; and a derivator that derives a beam width communicable in the second coverage on the basis of the first coverage and the second coverage acquired by the acquirer.

One aspect of the present invention is a program for causing a computer to function as a communication device, the program causing the computer to function as: an acquirer that acquires a first coverage indicating a range in which the communication device and a terminal can communicate with each other, and a second coverage indicating a range in which the communication device provides a communication service; and a derivator that derives a beam width communicable in the second coverage on the basis of the first coverage and the second coverage acquired by the acquirer.

### [Advantageous Effects of Invention]

According to the present invention, communication efficiency can be improved and quality of a communication service can be ensured.

### [Brief Description of Drawings]

[Fig. 1]

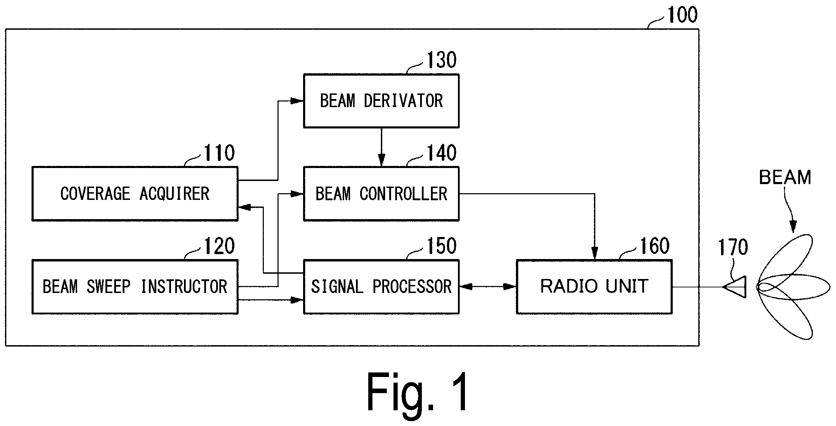

   Fig. 1 is a block diagram showing a configuration of a communication device.
[Fig. 2]

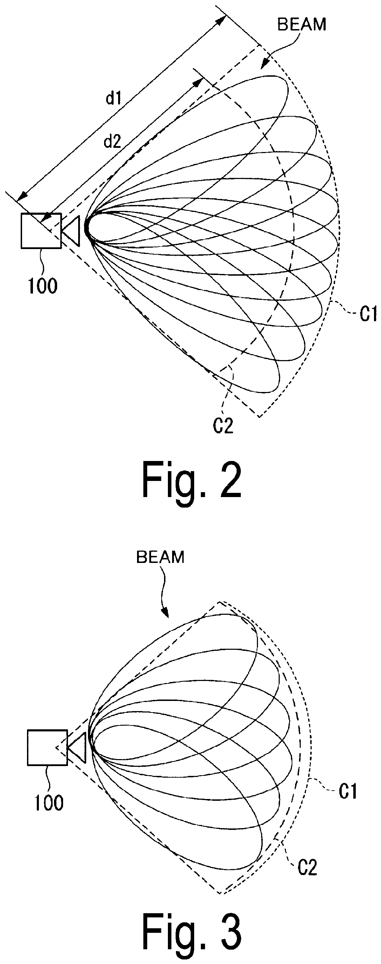

   Fig. 2 is a schematic diagram showing a first coverage, a second coverage, and the like.
[Fig. 3]
   Fig. 3 is a schematic diagram showing the first coverage, the second coverage, and the like.
[Fig. 4]

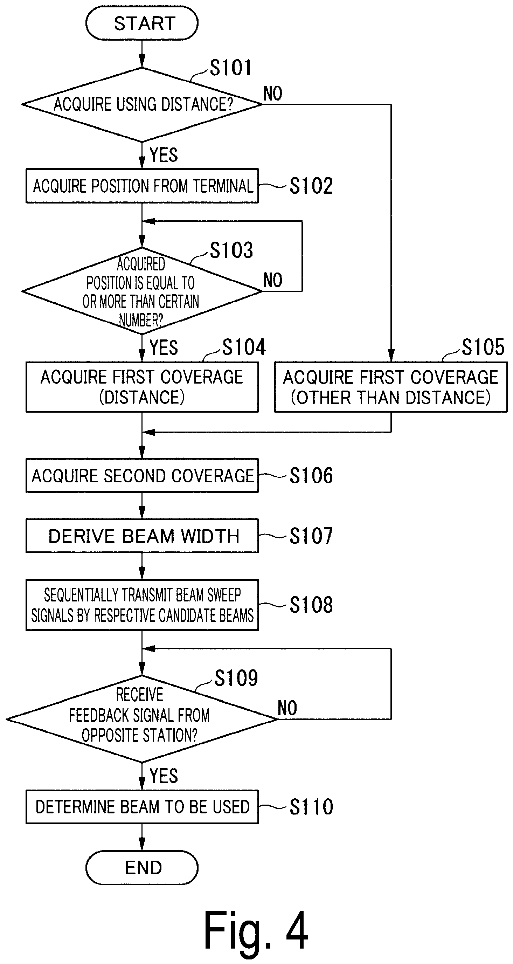

   Fig. 4 is a flowchart showing a flow of processing of the communication device.
[Fig. 5]
   Fig. 5 is a diagram for explaining general beam sweeping.
[Fig. 6]
   Fig. 6 is a block diagram showing a configuration of a conventional communication device.
[Fig. 7]
   Fig. 7 is a flowchart showing a flow of beam selection processing of the conventional communication device.

### [Description of Embodiments]

An embodiment of the present invention will be described in detail with reference to the diagrams.
Fig. 1 is a block diagram showing a configuration of a communication device 100. The communication device 100 includes a coverage acquirer 110, a beam sweep instructor 120, a beam width derivator 130, a beam controller 140, a signal processor 150, a radio unit 160, and an antenna 170.

The coverage acquirer 110 acquires a first coverage indicating a range in which the communication device 100 and a terminal not shown can communicate with each other, and a second coverage indicating a range in which the communication device 100 provides a communication service. In the following description, when the first coverage and the second coverage are not distinguished from each other, they are expressed as coverage. A method of acquiring the coverage will be described later. The coverage acquirer 110 outputs the acquired coverage to the beam width derivator 130.

The beam sweep instructor 120 outputs a beam sweep signal generation instruction to the signal processor, and at the same time outputs a beam switching instruction to the beam controller 140 so as to switch the beam in synchronization with the beam sweep signal.

The beam width derivator 130 derives a beam width communicable in the second coverage on the basis of the first coverage and the second coverage. Figs. 2 and 3 are schematic diagrams showing the first coverage, the second coverage, and the like. Figs. 2 and 3 show the communication device 100, a first coverage C1, and a second coverage C2. In Figs. 2 and 3, an elliptical figure indicates the shape of a beam.

The first coverage C1 is determined by a first distance d1 at which the communication device 100 and the terminal can communicate with each other, and the second coverage is determined by a second distance d2. As shown in Fig. 3, the beam width derivator 130 derives a beam width communicable in the second coverage, from the difference between the first distance and the second distance.

The beam width derivator 130 obtains, for example, the difference between the distance d1 and the distance d2. The beam width derivator 130 calculates a required gain allowable reduction amount by using a theoretical value of distance attenuation relative to the difference. The beam width derivator 130 calculates the number of antenna elements that can be reduced in the antenna 170, from the required gain allowable reduction amount, and derives a beam width obtained when the number of antenna elements is reduced. Thus, in the present embodiment, the transmission efficiency can be improved by utilizing the power corresponding to the above-mentioned reduction amount for expanding the beam width.

The beam width derivator 130 which derives the beam width in this manner instructs a beam controller 202 to transmit a beam sweep signal with the derived beam width.

As shown in Fig. 3, the beam width derivator 130 derives the beam width so that the first coverage and the second coverage coincide or substantially coincide. Since the beam width may be discretely determined by the number of antenna elements of the antenna 170, the first coverage may also be discretely determined. In this case, the beam width derivator 130 may derive the beam width so that the first coverage becomes the minimum one exceeding the second coverage. Further, the beam width may be derived with a certain margin for the second coverage.

As shown in Fig. 3, since the beam width becomes wider, the number of beams covering the second coverage can be reduced. Since the number of beams is reduced, the number of beam searches is reduced, so that overhead can be reduced as compared with a conventional technique, thereby improving communication efficiency. Further, since the range for providing the communication service is covered, the quality of the communication service can be ensured. Therefore, according to the present embodiment, the communication efficiency can be improved and the quality of the communication service can be ensured.

Returning to the description of Fig. 1, the beam controller 140 controls the directivity of the beam formed by the radio unit 160, in accordance with the instruction from the beam sweep instructor 120. The signal processor 150 outputs various signals to the radio unit 160. The signal processor 150 outputs the beam sweep signal to the radio unit 160 when, for example, the generation instruction of the beam sweep signal is input. A signal obtained by converting a radio signal received from the antenna 170 by the radio unit 160 into an electric signal is input to the signal processor 150. When the signal processor 150 receives information about which beam has the best quality communication, by a feedback signal from a terminal, the signal processor 150 notifies the beam controller 159 to use the beam for communication.

The radio unit 160 switches the beam according to an instruction from the beam controller 140. The radio unit 160 converts the signal received from the signal processor 150 into a radio signal and transmits it from the antenna 170. The radio unit 160 converts the radio signal received from the antenna 170 into an electric signal and outputs it to the signal processor 150. Upon reception by a feedback signal, the radio unit 160 outputs the feedback signal to the signal processor 150.

The antenna 170 includes a plurality of antenna elements. In proportion to the number of antenna elements to be used, the beam width becomes narrower and the directivity of the beam becomes stronger.

Next, a method of acquiring the coverage will be described. The coverage may be acquired in any way by using any information, but several specific acquisition methods will be described. First, a method of acquiring the first coverage will be described.

In general, a beam sweep signal in a communication device is transmitted with a transmission power and a beam width fixedly determined based on a communication standard, equipment performance, and the like. In this case, the coverage (area) at which the beam sweep signal reaches is fixed.

Against this background, the coverage acquirer 110 acquires the coverage based on a line design that considers, for example, the transmission power of the communication device 100, the gain of beamforming, the beam sweep signal reception sensitivity of the terminal, as well as line design margins (e.g., fading margin, rain attenuation margin, and the like). The coverage acquirer 110 acquires the first coverage on the basis of the distance between the communication device 100 and the terminal.

For the distance between the communication device 100 and the terminal among them, the coverage acquirer 110 first acquires the position of the terminal. The position of the terminal may be acquired by using, for example, a GPS (Global Positioning System) provided in the terminal. Alternatively, the position of the terminal may be acquired by using the direction of the beam emitted toward the terminal by the communication device 100 and the time (RTT: Round Trip Time) required for communication of the transmission/reception signal between the communication device 100 and the terminal. Alternatively, the position of the terminal may be acquired by using image information of a camera installed in the communication device 100. Since the position of the communication device 100 is known, the distance between the communication device 100 and the terminal is acquired by acquiring the position of the terminal.

For example, the coverage acquirer 110 acquires a certain number or more of terminal locations, and estimates the first coverage on the basis of the maximum distance between any of the terminals 100, thereby acquiring the first coverage. The certain number described above may be, for example, a number proportional to the area, assuming that the larger the coverage area, the larger the variation in the distance.

Next, a method of acquiring the second coverage will be described. Generally, the second coverage may be determined by an index different from the communication standard or equipment performance based on the installation environment and propagation conditions of the communication device 100. It is also assumed that the second coverage is set on the basis of a service design guideline of a service provider.

Therefore, the coverage acquirer 110 acquires the second coverage from, for example, a host device, not shown, via a network, or acquires the second coverage from a storage device of the communication device 100, not shown, if the second coverage is stored in the storage device.

Fig. 4 is a flow chart showing a flow of processing of the communication device 100. In Fig. 4, the coverage acquirer 110 determines whether or not to acquire the first coverage using the distance of the terminal (step S101). Whether or not to acquire the first coverage by using the distance of the terminal is determined by referring to, for example, setting information that is stored in the storage device of the communication device 100 and indicates whether or not to acquire the first coverage by using the distance of the terminal.

When the first coverage is not acquired by using the distance of the terminal (step S101: NO), the coverage acquirer 110 acquires the first coverage by an acquisition method using something other than the distance (step S105), among the first coverage acquisition methods described above, and advances to step S106.

When acquiring the first coverage by using the distance of the terminal (step S101: YES), the coverage acquirer 110 acquires the position from the terminal (step S102). The coverage acquirer 110 determines whether or not the position acquired from the terminal becomes the certain number or more (step S103). When the position acquired from the terminal reaches the certain number or more (step S103: YES), the coverage acquirer 110 acquires the first coverage by estimating the first coverage on the basis of the maximum distance to the communication device 100 as described above (step S104).

Next, the coverage acquirer 110 acquires the second coverage by the above-described acquisition method (step S106). The beam width derivator 130 derives a beam width on the basis of the first coverage and the second coverage (step S108).

The beam width derivator 130 instructs the beam controller 202 to transmit a beam sweep signal with the derived beam width, and thereby the radio unit 160 sequentially transmits the beam sweep signal by placing it on each candidate beam (step S108).

When a feedback signal is received (step S109: YES), the signal processor 150 determines a beam to be used for subsequent communication on the basis of information about which beam quality is the best, the information being included in the feedback signal (step S110), and ends the processing.

Since the number of beams is reduced by the above-described processing, the number of beam searches is reduced, so that overhead can be reduced as compared with the prior art, thereby improving the communication efficiency. Further, since the range for providing the communication service is covered, the quality of the communication service can be ensured. Therefore, according to the present embodiment, the communication efficiency can be improved and the quality of the communication service can be ensured.

Fig. 4 has described the processing branching at step S101, but the processing branching from the step S101 to step S102 may be independent processing, or the processing branching from step S101 to step S105 may be independent processing.

When wishing to estimate a propagation path for the purpose of grasping the state of the propagation path in more detail due to MIMO (Multiple Input Multiple Output) or OFDM (Orthogonal Frequency Division Multiplexing) transmission or the like, the beam sweeping may be performed in two stages. Specifically, the beam sweeping of the first stage may be performed by the beam determined by the method described in the foregoing embodiment, and then the beam sweeping of the second stage may be performed by using a narrow beam having a high gain.

The coverage acquirer 110 may acquire the second coverage from an area radius designed on a map, or may acquire the second coverage by estimating a shielding rate from the distances between a plurality of terminals and the communication device 100 that are calculated by using the acquired positions of the terminals. Further, the coverage acquirer 110 may acquire the second coverage determined by examining a shielding rate when designing the communication device 100, or may acquire the second coverage determined by considering various types of information including the shielding rate and the like.

In the above embodiment, the beam width derivator 130 derives the beam width so that the first coverage and the second coverage coincide or substantially coincide, but it is also possible to derive the beam width at which the time required for the beam sweeping becomes minimum.

The first coverage may be determined in advance. In this case, the coverage acquirer 110 acquires the first coverage from a host device, not shown, via a network, or acquires the first coverage from a storage device of the communication device 100, not shown, if the first coverage is stored in the storage device.

The coverage acquirer 110, the beam sweep instructor 120, the beam width derivator 130, the beam controller 140, the signal processor 150, and the radio unit 160 may be configured using a processor such as a CPU (Central Processing Unit) and memory. In this case, the coverage acquirer 110, the beam sweep instructor 120, the beam width derivator 130, the beam controller 140, the signal processor 150, and the radio unit 160 function as the coverage acquirer 110, the beam sweep instructor 120, the beam width derivator 130, the beam controller 140, the signal processor 150, and the radio unit 160 by the processor executing a program. All or part of the functions of the coverage acquirer 110, the beam sweep instructor 120, the beam width derivator 130, the beam controller 140, the signal processor 150, and the radio unit 160 may be implemented by hardware such as an ASIC (Application Specific Integrated Circuit), PLD (Programmable Logic Device), or FPGA (Field Programmable Gate Array). The program described above may be recorded on a computer-readable recording medium. The computer-readable recording medium is, for example, a portable medium a flexible disk, a magnetooptical disk, a ROM, a CD-ROM, and a semiconductor storage device (e.g., SSD: Solid State Drive), and a storage device such as a hard disk and a semiconductor storage device built into a computer system. The program described above may be transmitted via telecommunication lines.

Although the embodiment of the present invention has been described in detail with reference to the drawings, a specific configuration is not limited to this embodiment, and design within the scope of the gist of the present invention and the like are included.

### [Industrial Applicability]

The present invention is applicable to a communication device that performs beam sweeping.

### [Reference Signs List]

- 100: Communication device
- 110: Coverage acquirer
- 120: Beam sweep instructor
- 130: Beam width derivator
- 140: Beam controller
- 150: Signal processor
- 160: Radio unit
- 170: Antenna

## Claims

1. A control method of a communication device, comprising:
an acquisition step of acquiring a first coverage indicating a range in which the communication device and a terminal can communicate with each other, and a second coverage indicating a range in which the communication device provides a communication service; and
a derivation step of deriving a beam width communicable in the second coverage on the basis of the first coverage and the second coverage acquired in the acquisition step.

2. The control method according to claim 1, wherein the acquisition step acquires the first coverage on the basis of a line design between the communication device and the terminal or a distance between the communication device and the terminal.

3. The control method according to claim 1, wherein the acquisition step acquires the second coverage from a host device.

4. The control method according to any one of claims 1 to 3, wherein the first coverage is determined by a first distance at which the communication device and the terminal can communicate with each other, the second coverage is determined by a second distance, and
the derivation step derives the beam width in accordance with a distance difference between the first distance and the second distance.

5. The control method according to any one of claims 1 to 4, further comprising a beam sweep step of performing beam sweeping with the beam width derived in the derivation step.

6. A communication device, comprising:
an acquirer that acquires a first coverage indicating a range in which the communication device and a terminal can communicate with each other, and a second coverage indicating a range in which the communication device provides a communication service; and
a derivator that derives a beam width communicable in the second coverage on the basis of the first coverage and the second coverage acquired by the acquirer.

7. A program for causing a computer to function as a communication device,
the program causing the computer to function as:
an acquirer that acquires a first coverage indicating a range in which the communication device and a terminal can communicate with each other, and a second coverage indicating a range in which the communication device provides a communication service; and
a derivator that derives a beam width communicable in the second coverage on the basis of the first coverage and the second coverage acquired by the acquirer.
